Europäisches Patentamt

European Patent Office

Office européen des brevets

(19)

(11) Veröffentlichungsnummer: **0 154 772**
**B1**

(12) **EUROPÄISCHE PATENTSCHRIFT**

(45) Veröffentlichungstag der Patentschrift:
**03.08.88**

(51) Int. Cl.⁴: **C 25 B 9/00,** H 01 M 8/24,
C 25 B 11/02

(21) Anmeldenummer: **85100473.9**

(22) Anmeldetag: **18.01.85**

(54) **Bipolarplatte für einen aus mehreren elektrochemischen Zellen mit Feststoffelektrolyt aufgebauten stapelartigen Apparat und Verfahren zu deren Herstellung.**

(30) Priorität: **26.01.84 CH 354/84**

(43) Veröffentlichungstag der Anmeldung:
**18.09.85 Patentblatt 85/38**

(45) Bekanntmachung des Hinweises auf die Patenterteilung:
**03.08.88 Patentblatt 88/31**

(84) Benannte Vertragsstaaten:
**CH DE FR GB IT LI SE**

(56) Entgegenhaltungen:
**GB - A - 978 977**
**US - A - 4 210 511**
**US - A - 4 217 401**
**US - A - 4 339 322**

**Direct Energy Conversion Programs, "Feasibility Study of SPE Fuel Cell Power Plants for Automotive Applications", P.O. 9-L61-3863V-1, prepared for University of California Los Alamos National Laboratory, General Electric, Lanl-2, November 17, 1981 S. Stucki and R. Müller, "Evaluation of materials for a water electrolyzer of the membrane type", Hydrogen Energy Progress, Proceedings of the 3rd World Hydrogen Energy Conference held in Tokyo, Japan, 23-26 June 1980, pp. 1799-1808, Pergamon Press**

(73) Patentinhaber: **BBC Brown Boveri AG, Haselstrasse, CH-5401 Baden (CH)**

(72) Erfinder: **Christen, Hans-Jörg, Rosenstrasse 6, CH-5417 Untersiggenthal (CH)**
Erfinder: **Devanty, Hubert, Dr., Chrüzlibergweg 8, CH-5432 Neuenhof (CH)**
Erfinder: **Schellenberg, Claude, Chileweg 4, CH-5413 Birmenstorf (CH)**
Erfinder: **Scherer, Günther, Dr., Birchhof 8, CH-5412 Gebenstorf (CH)**
Erfinder: **Stucki, Samuel, Dr., Sternenstrasse 7, CH-5415 Nussbaumen (CH)**

## Beschreibung

Die Erfindung geht aus von einer Bipolarplatte nach der Gattung des Oberbegriffs des Anspruchs 1 und von einem Verfahren zu deren Herstellung nach der Gattung des Oberbegriffs des Anspruchs 3.

Bipolarplatten für aus mehreren elektrochemischen Zellen nach Art einer Filterpresse stapelförmig aufgebaute Apparate müssen zahlreiche Bedingungen erfüllen. Einerseits sollen sie eine gute elektrische Leitfähigkeit haben, andererseits unter Betriebsbedingungen möglichst korrosionsfest sein. Neben metallischen Werkstoffen wie korrosionsbeständige Stähle, als Anoden passivierend wirkende Elemente (Ti, Zr, Hf, Nb, Ta etc., sogenannte «Ventilmetalle») werden auch Graphit, Graphitverbundwerkstoffe und zahlreiche Kombinationen von Werkstoffen verwendet. Ein derartiger Verbundwerkstoff bestehend aus Graphit und Polyvinylidenfluorid ist beispielsweise aus der US-A-4 214 969 bekannt. Für hochkorrosive Medien, vor allem bei Vorhandensein von Ozon, werden vielfach Trägermaterialien aus Titan in Form von massiven Platten oder porösen Folien verwendet (vgl. Direct Energy Conversion Programs, «Feasibility Study of SPE Fuel Cell Power Plants for Automotive Applications», P.O. 9-L61-3863V-1, prepared for University of California Los Alamos National Laboratory, General Electric, Lanl-2, November 17, 1981; S. Stucki and R. Müller, «Evaluation of materials for a water electrolyzer of the membrane type», Hydrogen Energy Progress, Proceedings of the 3rd World Hydrogen Energy Conference held in Tokyo, Japan, 23–26 June 1980, pp. 1799–1808, Pergamon Press).

In der US-A-4 210 511 wird ein stapelartig aufgebauter Elektrolyseapparat mit Feststoffelektrolyt, getrennten Anoden, Kathoden und Separatoren beschrieben. Die Elektroden bestehen aus porösem gesintertem Ni oder Ti oder aus Graphit, die Separatoren aus kompaktem dichtem Blech, vorzugsweise aus Ti. Die Anoden weisen auf der dem Separator zugewandten Seite Rillen auf. Die GB-A 978 977 zeigt eine kreisförmige, bipolarplattenähnliche Elektrodenanordnung, wobei auf einer zentralen massiven Trägerelektrode beidseitig poröse Nickelschichten verhältnismässig lose durch Punktschweissen befestigt sind. Die nur an der Peripherie vorhandenen Schweisspunkte fixieren die Nickelschichten geometrisch, während zwischen ihnen und der Trägerelektrode je ein schmaler Spalt vorhanden ist. In der US-A 4 217 401 wird ein bipolarer Separator aus einem Verbundwerkstoff auf Graphitbasis mit Kunststoffbinder und auf der Anodenseite teilweise eingebetteten Titanstäben beschrieben. Die Titanstäbe werden gegen die auf dem Feststoffelektrolyten aufgebrachte Anode gepresst. Die andere Seite des Separators ist mit Rillen versehen und wird direkt gegen die ebenfalls auf den Feststoffelektrolyten aufgebrachte Kathode gepresst. Die US-A 4 339 322 beschreibt einen bipolaren Stromkollektor aus einem Verbundwerkstoff aus Graphit, Kohlefasern und thermoplastischem Kunststoffbinder. Der Stromkollektor ist auf einer oder auf beiden Seiten mit Rillen versehen. Als Variante wird die der Anode zugewandte, gerillte Seite mit einer die Oxydation verhindernden Metallfolie (Ti) beklebt.

Die Erfahrung zeigt, dass graphit-(kohlenstoff-) haltige Werkstoffe zumindest auf der Anodenseite nicht korrosionsfest sind und ihre Lebensdauer zu wünschen übrig lässt. Wird andererseits massives Titan als Träger verwendet, so ist die Herstellung der für Feststoffelektrolyt-Zellen unbedingt erforderlichen Rillenstruktur durch mechanische Bearbeitung aufwendig und kostspielig. Ausserdem muss die aus porösem Titan bestehende anodenseitige Schicht zwecks Herstellung eines guten Druckkontakts für die Stromleitung mit einem geeigneten Edelmetall-Depassivierungsüberzug versehen sein. Dies ist ein weiterer Grund für das Auflaufen relativ hoher Kosten.

Es besteht daher das Bedürfnis nach neuen preisgünstigen Bipolarplatten und einem kostensenkenden Verfahren zu deren Herstellung.

Der Erfindung liegt die Aufgabe zugrunde, eine Bipolarplatte für eine elektrochemische Zelle sowie ein Verfahren zu deren Herstellung anzugeben, welche gute elektrische Leitfähigkeit und Stromverteilung mit hoher Korrosionsfestigkeit und guter mechanischer und chemisch-thermodynamischer Langzeitstabilität verbindet und möglichst geringen technologischen und kommerziellen Aufwand erfordert. Die Bipolarplatte soll ferner vergleichsweise dünn und trotzdem gasdicht ausgeführt werden können.

Diese Aufgabe wird durch die im kennzeichnenden Teil des Anspruchs 1 und des Anspruchs 3 angegebenen Merkmale gelöst.

Die Erfindung wird anhand der nachfolgenden, durch Figuren näher erläuterten Ausführungsbeispiele beschrieben. Dabei zeigt:

Fig. 1 einen Schnitt durch eine Ausführung einer Bipolarplatte,

Fig. 2 einen Schnitt im Aufriss durch eine weitere Bipolarplatte,

Fig. 3 einen Schnitt im Grundriss durch die Bipolarplatte gemäss Fig. 2,

Fig. 4 ein Fliessdiagramm (Blockdiagramm) des Herstellungsverfahrens einer Bipolarplatte gemäss Figuren 2 und 3,

Fig. 5 den Temperaturverlauf über der Zeit für die Wärmebehandlung bei der Herstellung der porösen Titanplatte mit Rillenstruktur,

Fig. 6 den Temperaturverlauf über der Zeit für die Wärmebehandlung beim Verbinden der porösen Titanplatte mit der massiven Titanplatte.

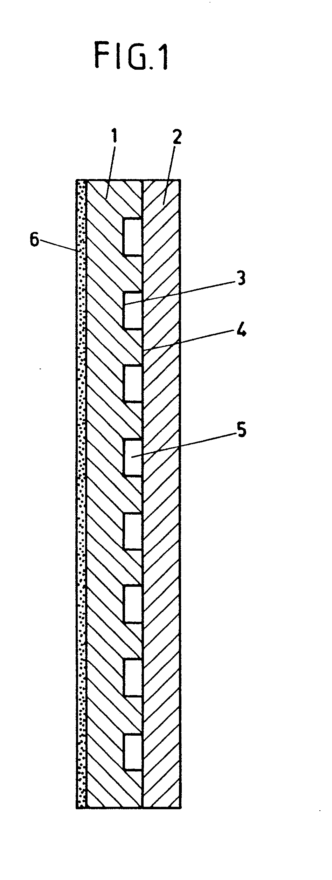

In Fig. 1 ist ein Schnitt durch eine erste Ausführung einer Bipolarplatte dargestellt. 1 ist eine poröse Titanplatte mit einer einseitigen Rillenstruktur 3, welche sich auf der dem Feststoffelektrolyten abgewandten Seite befindet. 2 ist eine nicht poröse, massive Titanplatte. Die beiden Titanplatten 1 und 2 sind über die durch die Stege zwischen der Rillenstruktur 3 gebildeten Kontaktstellen 4 miteinander mechanisch fest und elektrisch leitend verbunden. Diese praktisch einer Schweissverbindung gleichkommenden Kontaktstellen 4 werden durch einen Sinterprozess bewerkstelligt. Durch die feste Verbindung der Titanplatten 1 und 2 wird dank der Rillenstruktur 3 ein System von Kanälen 5 gebildet. 6 ist eine Oberflächenschicht aus einem elektrokatalytisch aktiven Stoff.

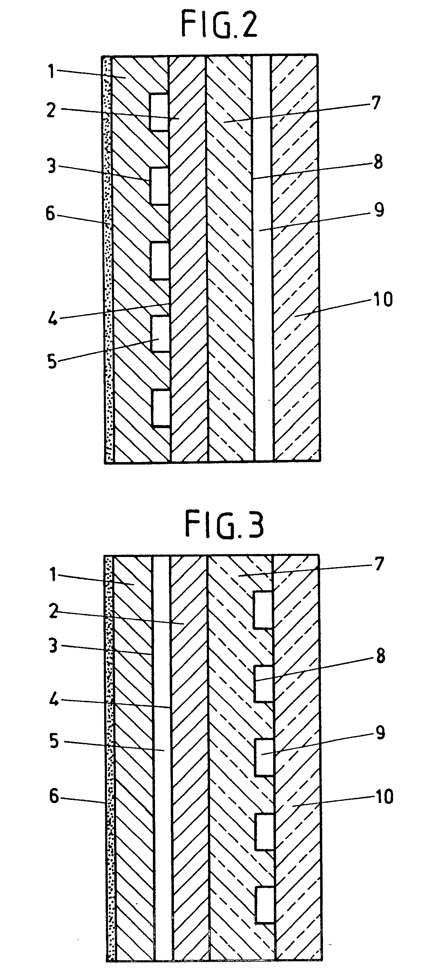

Fig. 2 zeigt einen Schnitt im Aufriss und Fig. 3 einen ebensolchen im Grundriss durch eine weitere Ausführung einer Bipolarplatte. Die Bezugszeichen 1 bis 6 entsprechen genau denjenigen der Fig. 1. 7 stellt eine nicht poröse, massive Verbundplatte aus einer Mischung von Graphit und Polyvinylidenfluorid dar, welche auf einer Seite eine Rillenstruktur 8 aufweist. 10 ist eine poröse Graphit/Polyvinylidenfluorid-Verbundplatte. Die beiden Verbundplatten 7 und 10 sind auf der Seite der Rillenstruktur 8 mechanisch fest und elektrisch leitend miteinander verbunden. Auf diese Art und Weise wird ein System von Kanälen 9 gebildet. Die nicht poröse, massive Titanplatte 2 und die nicht poröse, massive Graphit/Polyvinylidenfluorid-Verbundplatte 7 sind mechanisch fest und elektrisch leitend miteinander verbunden. Auf diese Art wird ein kompaktes Ganzes gebildet. In den Figuren 2 und 3 sind die Rillenstrukturen 3 und 8 (entsprechend Kanäle 5 und 9) kreuzweise (um 90° versetzt) angeordnet dargestellt. Dies kann Vorteile in der Flüssigkeits- und Gasführung beim Zusammenbau des ganzen Stapels einer Vielzahl von Zellen bringen. Selbstverständlich können die Rillenstrukturen gegenseitig im Raum auch anders zugeordnet sein (parallele Kanäle oder Kanäle, die sich unter einem anderen Winkel als 90° kreuzen).

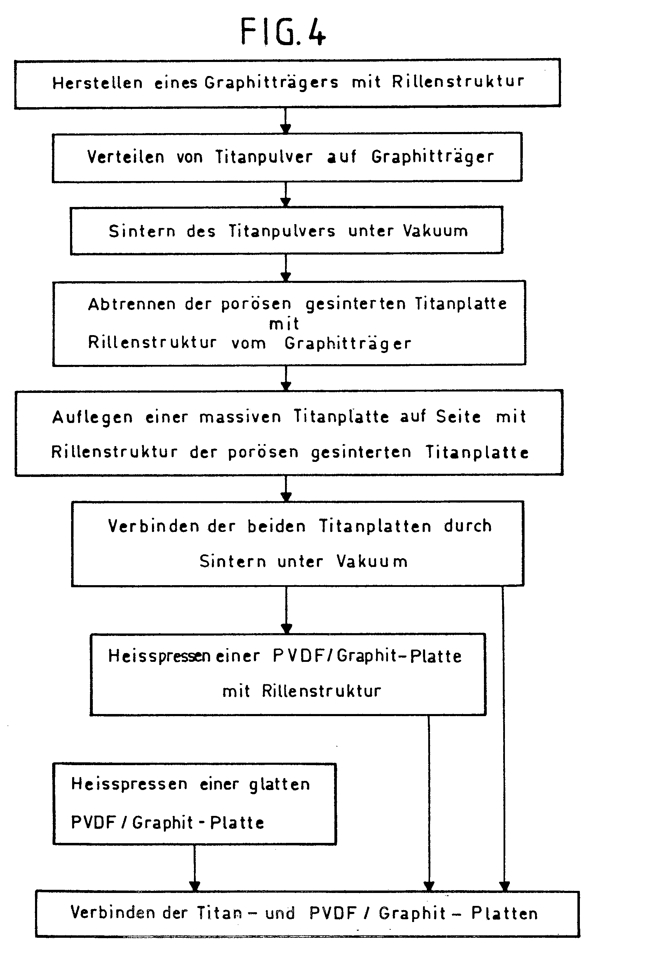

In Fig. 4 ist ein Fliessdiagramm (Blockdiagramm) des Herstellungsverfahrens einer Bipolarplatte entsprechend einer Ausführung nach Figuren 2 und 3 dargestellt. Die Figur bedarf keinen weiteren Erläuterungen. PVDF=Polyvinylidenfluorid.

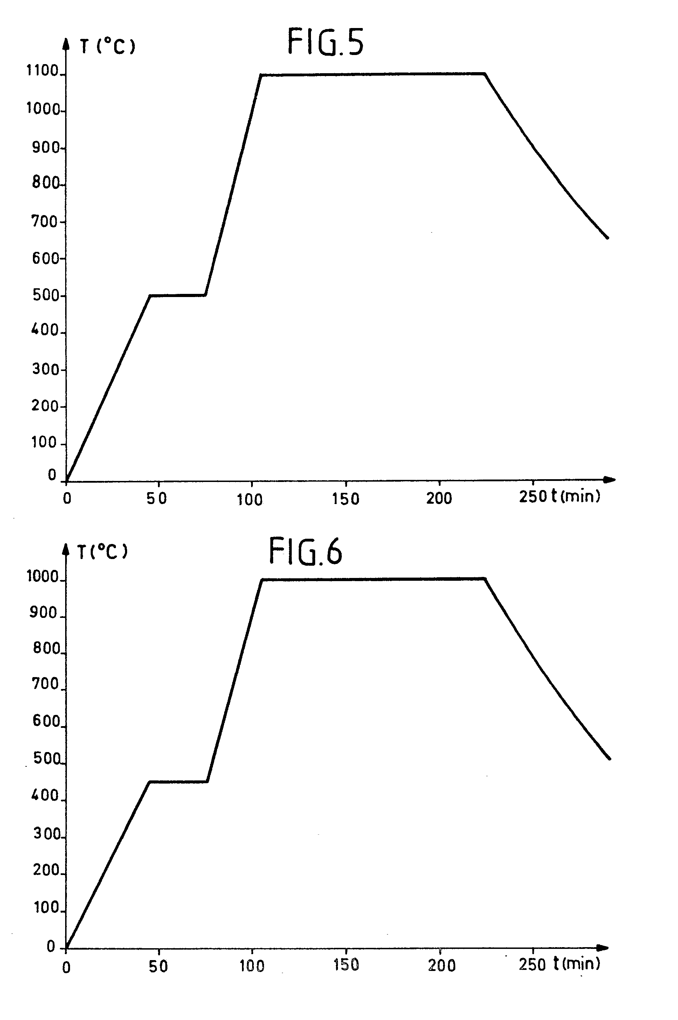

Fig. 5 stellt den Temperaturverlauf in Funktion der Zeit für die Wärmebehandlung bei der pulvermetallurgischen Herstellung der porösen Titanplatte 1 mit Rillenstruktur 3 dar. Die einzelnen Phasen des Aufheizens, Trocknens und Sinterns des Titanpulvers sind klar ersichtlich.

In Fig. 6 ist der Temperaturverlauf in Funktion der Zeit für die Wärmebehandlung beim Verbinden der porösen Titanplatte 1 mit der nicht porösen, massiven Titanplatte 2 dargestellt. Die Figur erklärt sich von selbst.

Ausführungsbeispiel I:
Siehe Fig. 1, Fig. 5 und Fig. 6!
Zunächst wurde eine poröse Titanplatte 1 mit Rillenstruktur 3 gefertigt. Zu diesem Zweck wurde ein plattenförmiger Träger aus Graphit (z.B. Ringsdorff EK 72) hergestellt, welcher auf seiner nach oben gerichteten Oberfläche das Negativprofil zur Rillenstruktur 3 aufwies. Die den Rillen in der Titanplatte 1 entsprechenden Stege im Graphitträger wurden mit leichtem Anzug (15°-Trapezprofil der Flanken) versehen, um dem Schwinden beim nachfolgenden Sinterprozess Rechnung zu tragen, ein Kleben zu verhindern und ein leichtes Ablösen der fertigen Titanplatte 1 zu ermöglichen (Anzug in Fig. 1 nicht eingezeichnet). Zur Aufnahme des Titanpulvers wurde der Graphitträger mit einem nach oben vorstehenden Rand ausgebildet. Der Graphitträger wurde mit seiner negativen Rillenstruktur nach oben auf eine horizontale Unterlage gelegt und mit Graphitpulver (Lonza KS 75) bestäubt, um das nachträgliche Kleben des Titanpulvers zu verhüten. Nun wurde Titanpulver der Partikelgrösse 15 μm bis 90 μm (Sumitomo, Osaka, SS150) in einer Höhe von 4 mm (Rillenstruktur eingerechnet) mechanisch auf den Graphitträger gegeben und gleichmässig verteilt. Das Ganze wurde nun in einen Vakuumofen mit einem Restgasdruck von $1,33 \cdot 10^{-3}$ Pa ($10^{-5}$ Torr) eingeschoben und der nachfolgenden Wärmebehandlung unterzogen (siehe Fig. 5!):

  – Aufheizen von Raumtemperatur auf 500° C im Zeitraum von 45 min.
  – Halten bei 500° C während 30 min.
  – Aufheizen von 500° C auf 1100° C im Zeitraum von 30 min.
  – Halten bei 1100° C während 2 h (Sintern)
  – Abkühlen im Ofen auf ca. Raumtemperatur

Nach dem Abkühlen wurde die gesinterte poröse Titanplatte 1 vom Graphitträger abgelöst und mit der Seite der Rillenstruktur 3 nach unten auf eine zuvor mit Titanpulver bestreute nicht poröse, massive Titanplatte 2 von 1 mm Dicke gelegt. Letztere dient als Anodenstromkollektor. Das Ganze wurde auf einem ebenen horizontalen Graphitträger in einen Vakuumofen mit einem Restgasdruck von $1,33 \cdot 10^{-3}$ PA ($10^{-5}$ Torr) eingeschoben und der nachfolgenden Wärmebehandlung unterzogen (siehe Fig. 6!):

  – Aufheizen von Raumtemperatur auf 500° C im Zeitraum von 45 min.
  – Halten bei 500° C während 30 min.
  – Aufheizen von 500° C auf 1000° C im Zeitraum von 30 min.
  – Halten bei 1000° C während 2 h (Verbinden durch Sintern)
  – Abkühlen im Ofen auf ca. Raumtemperatur

Die Kontaktstellen 4 zwischen der porösen Titanplatte mit Rillenstruktur 3 und der nicht porösen, massiven Titanplatte 2 erwiesen sich als sehr feste metallurgische Bindungen. Dabei blieb die Titanplatte eben und zeigte nach dem Abkühlen keinerlei Verwerfungen oder Wellenbildungen. Die poröse Titanplatte 1 wurde hierauf mit einer Oberflächenschicht aus einem elektrokatalytisch aktiven Stoff, im vorliegenden Fall PbO$_2$ versehen. Die fertige beschichtete Bipolarplatte wies eine Dicke von ca. 4,5 mm auf.

Ausführungsbeispiel II:
Siehe Fig. 2 und Fig. 3
Gemäss Beispiel I wurde zunächst eine Titan-Verbundplatte entsprechend Fig. 1 hergestellt.

Durch Heisspressen wurde ferner eine nicht poröse, massive Verbundplatte 7 aus einer Mischung von Graphit und Polyvinylidenfluorid mit Rillenstruktur 8 sowie eine poröse Verbundplatte 10 aus einer ebensolchen Mischung hergestellt. Als Ausgangspulver wurden die folgenden Komponenten verwendet:

80 Gew.% Graphit (Lonza KS 75)
20 Gew.% Polyvinylidenfluorid (Solvay Solef 5008)

Die Platten 7 und 10 wurden durch Mischen, Einfüllen in entsprechende Formen und Heisspressen der Pulver bei 220° C während 15 min. unter einem Druck von 10 MPa gefertigt.

Schliesslich wurden alle Platten zur endgültigen Bipolarplatte durch Heisspressen und unter Verwendung eines elektrisch leitenden Klebers vereinigt. Die fertige Bipolarplatte wies eine Dicke von ca. 8,5 mm auf.

Die Erfindung ist nicht auf die Ausführungsbeispiele beschränkt. Insbesondere können die Oberflächenschichten 6 aus $(Ir, Ru)O_2$ oder aus Pt bestehen, falls die elektrochemische Zelle zur $H_2$-Gewinnung durch Wasserzersetzung verwendet werden soll. Im Falle der elektrochemischen Ozonerzeugung besteht die Oberflächenschicht 6 vorteilhafterweise aus $PBO_2$.

Die Übergänge poröse/nicht poröse Platte können auch kontinuierlich statt diskret sein. Dies gilt insbesondere für die Verbundplatten 7 und 10.

Die Reihenfolge der Verfahrensschritte bei der Herstellung der Bipolarplatte nach Fig. 2 und Fig. 3 kann auch anders gewählt werden, indem zunächst die Platte 7 auf die Platte 2 heiss aufgepresst, aufgesintert und/oder elektrisch leitend aufgeklebt wird und die Rillenstruktur 8 tragende Seite von 7 danach mit der Platte 10 abgedeckt und durch Heisspressen, Sintern und/oder Kleben mechanisch fest und elektrisch leitend verbunden wird. Die Wärmebehandlungen gemäss Figuren 5 und 6 können sowohl in der Zeit- wie in der Temperaturachse von den hier angeführten Mittelwerten abweichen. Dies gilt insbesondere für die Sintertemperaturen für welche eine Toleranz von bis zu ± 100° C angenommen werden kann.

Die Vorteile insbesondere der Platte nach Fig. 2 und Fig. 3 ergeben sich wie folgt:

— Die mechanische Festigkeit wird im wesentlichen durch die nicht poröse, massive Titanplatte 2 bestimmt, wodurch die gesamte Bipolarplatte vergleichsweise dünn und trotzdem vollkommen gasdicht ausgeführt werden kann.

— Die Stromverteilung kann gleichmässig gestaltet werden.

— Auf der Anodenseite (Titanseite) ist keine Korrosion durch $O_2$ oder $O_3$ zu befürchten, da hier Graphit fehlt.

— Der Kathodenteil (Graphitseite) kann dünn gehalten werden, da er mechanisch nicht beansprucht wird.

## Patentansprüche

1. Bipolarplatte für einen aus mehreren elektrochemischen Zellen mit Feststoffelektrolyt aufgebauten stapelartigen Apparat, wobei mindestens ein als Stromkollektor dienender Träger aus einer porösen, auf der einen Seite mit einer Rillenstruktur (3) versehenen Titanplatte (1) vorgesehen ist, dadurch gekennzeichnet, dass die Seite mit Rillenstruktur (3) mit einer massiven, nicht porösen Titanplatte (2) über ebene Kontaktstellen (4) mechanisch fest und elektrisch leitend durch Sintern verbunden ist, derart dass geschlossene, zusammenhängende Kanäle (5) vorhanden sind, und dass die der Rillenstruktur (3) abgewandte Seite der porösen Titanplatte (1) mit einer Oberflächenschicht (6) aus einem elektrokatalytisch aktiven Stoff ausgewählt aus $(Ir, Ru)O_2$ oder aus Pt oder aus $PbO_2$ besteht.

2. Bipolarplatte nach Anspruch 1, dadurch gekennzeichnet, dass zusätzlich auf der der Rillenstruktur (3) der porösen Titanplatte (1) abgewandten Seite der massiven, nicht porösen Titanplatte (2) eine massive, nicht poröse, auf ihrer der Titanplatte (2) abgewandten Seite eine Rillenstruktur (8) aufweisende und Kanäle (9) bildende Platte (7) aus einem Verbundwerkstoff Graphit/ Polyvinylidenfluorid fest verbunden angeordnet ist, welche ihrerseits auf der Seite ihrer Rillenstruktur (8) eine mit ihr unter Zwischenschaltung eines elektrisch leitenden Klebers fest verbundene, als Stromkollektor dienende poröse Platte (10) aus einem Verbundwerkstoff Graphit/Polyvinylidenfluorid trägt.

3. Verfahren zur Herstellung einer Bipolarplatte für einen aus mehreren elektrochemischen Zellen mit Feststoffelektrolyt aufgebauten stapelartigen Apparat, wobei ein als Stromkollektor dienender Träger durch Sintern von Titanpulver erzeugt wird, dadurch gekennzeichnet, dass Titanpulver auf ein die Negativform einer Rillenstruktur (3) aufweisendes Substrat aus Graphit aufgebracht, mechanisch verteilt und unter Vakuum zu einer porösen Titanplatte (1) gesintert, dass die besagte Titanplatte (1) vom Substrat entfernt und mit der die Rillenstruktur (3) aufweisenden Seite auf eine mit einer dünnen Schicht von Titanpulver bedeckte massive, nicht poröse Titanplatte (2) gelegt und mit der letzteren unter Vakuum durch Sintern zu einem einzigen mechanisch festen und elektrisch leitenden, geschlossene, zusammenhängende Kanäle (5) aufweisenden Ganzen verbunden wird, und dass die der Rillenstruktur (3) abgewandte Seite der porösen Titanplatte (1) mit einer Oberflächenschicht (6) aus einem elektrokatalytisch aktiven Stoff ausgewählt aus $(Ir, Ru)O_2$ oder aus Pt oder aus $PbO_2$ belegt wird.

4. Verfahren nach Anspruch 3, dadurch gekennzeichnet, dass auf die freie, der Rillenstruktur (3) der porösen Titanplatte (1) abgewandten Seite der massiven, nicht porösen Titanplatte (2) eine auf ihrer, der Titanplatte (2) abgewandten Seite eine Rillenstruktur (8) aufweisende nicht poröse Platte (7) aus einem Verbundwerkstoff Graphit/Polyvinylidenfluorid heiss aufgepresst, aufgesintert und/oder elektrisch leitend aufgeklebt und deren die Rillenstruktur (8) aufweisende Seite mit einer porösen Platte (10) aus einem Verbundwerkstoff Graphit/Polyvinylidenfluorid abgedeckt und durch Heisspressen, Sintern und/oder Kleben mechanisch fest und elektrisch leitend verbunden wird.

## Claims

1. Bipolar plate for an apparatus constructed in the form of a stack of several electrochemical cells containing solid electrolyte, at least one carrier, serving as current collector and composed of a porous titanium plate (1) provided with a groove structure (3) on one side, being provided, characterized in that the side having groove structure (3) is joined to a solid, nonporous titanium plate (2) via flat contact points (4) in a mechanically firm and electrically conducting manner by sintering in a manner such that closed, continuous channels (5) are present, and in that the side of the porous titanium plate (1) facing away from the groove structure (3) consists (sic) with a surface layer (6) composed of an electrocatalytically active substance selected from (Ir, Ru)$O_2$ or from Pt or from $PbO_2$.

2. Bipolar plate according to Claim 1, characterized in that, additionally, on the side of the solid, nonporous titanium plate (2) facing away from the groove structure (3) of the porous titanium plate (1) there is provided, in a firmly joined manner, a solid, nonporous plate (7) composed of a composite graphite/polyvinylidene fluoride material which has a groove structure (8) on its side facing away from the titanium plate (2) and forms channels (9) and which carries in its turn, on the side with its groove structure (8), a porous plate (10) composed of a composite graphite/polyvinylidene fluoride material which is firmly joined to it with the insertion of an electrically conducting adhesive and serves as current collector.

3. Process for manufacturing a bipolar plate for an apparatus constructed in the form of a stack of several electrochemical cells containing solid electrolyte, a carrier which serves as current collector being produced by sintering of titanium powder, characterized in that titanium powder is applied to a graphite substrate having the negative form of a groove structure (3), mechanically distributed and sintered under vacuum to form a porous titanium plate (1), in that the said titanium plate (1) is removed from the substrate and laid with the side having the groove structure (3) on a solid, nonporous titanium plate (2) covered with a thin layer of titanium powder and joined to the latter under vacuum by sintering to form a single, mechanically solid and electrically conducting whole having closed, continuous channels (5) and in that the side of the porous titanium plate (1) facing away from the groove structure (3) is coated with a surface layer (6) composed of an electrocatalytically active substance selected from (Ir, Ru)$O_2$ or from Pt or from $PbO_2$.

4. Process according to Claim 3, characterized in that, onto the free side of the solid, nonporous titanium plate (2) facing away from the groove structure (3) of the porous titanium plate (1), there is hot-pressed on, sintered on and/or bonded on in an electrically conducting manner a nonporous plate (7) which is composed of a composite graphite/polyvinylidene fluoride material and has a groove structure (8) on its side facing away from the titanium plate (2) and whose side which has the groove structure (8) is covered with a porous plate (10) composed of a composite graphite/polyvinylidene fluoride material and is joined by hot pressing, sintering and/or bonding in a mechanically firm and electrically conducting manner.

## Revendications

1. Plaque bipolaire pour un appareil construit sous forme d'un empilage de plusieurs cellules électrochimiques contenant électrolyte solide, au moins un support jouant le rôle de collecteur de courant et composé d'une plaque de titane poreuse (1) munie d'une structure cannelée (3) d'un côté étant prévu, caractérisée en ce que le côté ayant une structure cannelée (3) est relié à une plaque de titane non poreuse solide (2) par des points de contact plats (4) d'une manière ferme mécaniquement et conductrice de l'électricité, par frittage d'une manière telle que des canaux clos, continus (5) sont présents, et en ce que le côté de la plaque de titane poreuse (1) qui fait face en direction opposée à la structure cannelée (3) est constitué (sic) avec une couche superficielle (6) composée d'une substance active électrocatalytiquement choisie parmi (Ir, Ru)$O_2$ ou Pt $PbO_2$.

2. Plaque bipolaire selon la revendication 1, caractérisée en ce que, en outre, du côté de la plaque de titane non poreuse, solide (2) faisant face en direction opposée à la structure cannelée (3) de la plaque de titane poreuse (1), on prévoit, fixée de manière solide, une plaque non poreuse solide (7) composée d'un matériau composite de graphite/fluorure de polyvinylidène qui a une structure cannelée (8), du côté faisant face en direction opposée à la plaque de titane (2) et qui forme des canaux (9) et qui porte à son tour, du côté à structure cannelée (8), une plaque poreuse (10) composée d'un matériau composite graphite/fluorure de polyvinylidène qui est reliée fermement à celle-ci par insertion d'un adhésif conducteur de l'électricité et qui sert de collecteur de courant.

3. Procédé pour la fabrication d'une plaque bipolaire pour un appareil construit sous forme d'un empilage de plusieurs cellules électrochimiques contenant un électrolyte solide, un support qui sert de collecteur de courant étant obtenu par frittage de poudre de titane, caractérisé en ce que l'on applique de la poudre de titane à un substrat de graphite ayant la forme négative d'une structure cannelée (3) répartie mécaniquement et frittée sous vide pour former une plaque de titane poreuse (1) et en ce que ladite plaque de titane (1) est retirée du substrat et posée avec le côté portant la structure cannelée (3) sur une plaque de titane non poreuse solide (2), couverte d'une fine couche de poudre de titane, et reliée à cette dernière sous vide par frittage pour former un tout unique, solide mécaniquement et conducteur de l'électricité, ayant des canaux continus clos (5), et en ce que le côté de la plaque de titane poreuse (1) faisant face au côté opposé à la structure cannelée (3) est revêtu d'une couche superficielle (6) composée d'une substance active électrocatalytiquement, choisie parmi (Ir, Ru)O$_2$ ou Pt ou PbO$_2$.

4. Procédé selon la revendication 3, caractérisé en ce que sur côté libre de la plaque de titane non poreuse, solide (2) faisant face au côté opposé à la structure cannelée (3) de la plaque de titane poreuse (1), une plaque non poreuse (7) se trouve pressée à chaud, frittée sur et/ou collée sur celle-ci d'une manière conductrice de l'électricité, la plaque (7) qui est composée d'un matériau composite de graphite/fluorure de polyvinylidène et qui porte une structure cannelée (8) sur son côté faisant face au côté opposé la plaque de titane (2) et dont le côté qui a la structure cannelée (8) est couvert d'une plaque poreuse (10) composée d'un matériau composite de graphite/fluorure de polyvinylidène et est joint par pression à chaud, frittage et/ou collage d'une manière ferme mécaniquement et donductrice de l'électricité.

0 154 772

# FIG.1

7

0 154 772

# FIG.2

# FIG.3

# FIG.4

| Herstellen eines Graphitträgers mit Rillenstruktur |
|---|

↓

| Verteilen von Titanpulver auf Graphitträger |
|---|

↓

| Sintern des Titanpulvers unter Vakuum |
|---|

↓

| Abtrennen der porösen gesinterten Titanplatte mit<br>Rillenstruktur vom Graphitträger |
|---|

↓

| Auflegen einer massiven Titanplatte auf Seite mit<br>Rillenstruktur der porösen gesinterten Titanplatte |
|---|

↓

| Verbinden der beiden Titanplatten durch<br>Sintern unter Vakuum |
|---|

↓

| Heisspressen einer PVDF/Graphit–Platte<br>mit Rillenstruktur |
|---|

| Heisspressen einer glatten<br>PVDF / Graphit - Platte |
|---|

↓

| Verbinden der Titan – und PVDF / Graphit – Platten |
|---|

FIG.5

FIG.6